# EUROPÄISCHE PATENTSCHRIFT

(11) **EP 2 806 150 B1**
(45) Veröffentlichungstag und Bekanntmachung des Hinweises auf die Patenterteilung: **02.12.2015**
(21) Anmeldenummer: 14163125.9
(22) Anmeldetag: 02.04.2014
(51) Int. Cl.: F02M 51/06, F16K 31/06

(54) **Elektromagnetisch betätigbares Ventil**
Electromagnetically actuated valve
Soupape actionnée de manière électromagnétique

(30) Priorität: 24.05.2013 DE 102013209672
(43) Veröffentlichungstag der Anmeldung: 26.11.2014
(73) Patentinhaber: Robert Bosch GmbH, 70442 Stuttgart (DE)
(72) Erfinder: Pohlmann, Jens, 74321 Bietigheim-Bissingen (DE); Abel, Joerg, 70839 Gerlingen (DE); Salvat Massoni, Anna, 71640 Ludwigsburg (DE); Scheffel, Martin, 71665 Vaihingen (DE); Rogler, Philipp, 70176 Stuttgart (DE)

(56) Entgegenhaltungen:
- DE-A1- 19 833 461
- JP-A- 2010 261 396

## Beschreibung

### Stand der Technik

Die vorliegende Erfindung betrifft ein elektromagnetisch betätigbares Ventil zum Steuern von Fluiden, insbesondere von Kraftstoff.

Ventile sind aus dem Stand der Technik in unterschiedlichen Ausgestaltungen bekannt. Bei Kraftstoffeinspritzventilen werden häufig elektromagnetisch betätigbare Ventile verwendet, bei denen ein Magnetanker mittels eines Innenpols angezogen wird. Hierbei kann ein Anschlagen des Magnetankers am Innenpol oder einem Anschlag auftreten. Hierdurch kann im Betrieb ein Verschließ auftreten, so dass die verschleißbeanspruchten Bauteile häufig mit einer verschleißfesten Schicht, beispielsweise aus Chrom oder Nickel, versehen sind. Ferner ist aus der DE 198 33 461 A1 ein Magnetventil bekannt, bei dem die aneinander schlagenden Bauteile Magnetanker und Innenpol derart gestaltet sind, dass eines der gegeneinander schlagenden Bauteile ein sphärisch gewölbte Oberfläche aufweist. Diese Ausgestaltung hat sich grundsätzlich bewährt, allerdings wäre es wünschenswert, wenn eine weitere Geräuschreduzierung und Verschleißminderung möglich wäre, um eine möglichst lange Lebensdauer von Magnetventilen sicherzustellen.

Aus der JP 2010-261396 A ist bereits ein elektromagnetisch betätigbares Ventil zum Steuern von Fluiden in der Form eines Brennstoffeinspritzventils bekannt. Das Ventil umfasst dabei einen Innenpol und einen Magnetanker, wobei der Innenpol eine zum Magnetanker gerichtete erste Stirnseite aufweist und der Magnetanker eine zum Innenpol gerichtete zweite Stirnseite aufweist. Zwischen der ersten und zweiten Stirnseite ist eine erste Kontaktlinie und eine zweite Kontaktlinie vorhanden, wenn sich der Innenpol und der Magnetanker berühren, da zwei kreisringförmig umlaufende, erhabene Anschlagrippen an der dem Innenpol zugewandten Stirnseite des Magnetankers vorgesehen sind.

### Offenbarung der Erfindung

Das erfindungsgemäße elektromagnetisch betätigbare Ventil zum Steuern von Fluiden mit den Merkmalen des Anspruchs 1 weist demgegenüber den Vorteil auf, dass eine zusätzliche Dämpfung und Reduzierung eines Anschlagimpulses möglich ist. Hierbei kann ferner erfindungsgemäß ein verbessertes Verschleißverhalten des Ventils erreicht werden. Dies wird erfindungsgemäß dadurch erreicht, dass ein Innenpol und ein Magnetanker jeweils eine zueinander gerichtete Stirnfläche aufweisen, wobei die Stirnflächen derart geformt sind, dass zwischen den beiden Stirnflächen eine erste und zweite Kontaktlinie vorhanden ist, wenn sich der Innenpol und der Magnetanker berühren. Ferner ist hierbei ein Dämpfungsvolumen zwischen der ersten und zweiten Kontaktlinie vorhanden. Erfindungsgemäß ist somit zwischen zwei Kontaktlinien ein dämpfendes Fluidvolumen vorhanden, was einen Anschlagimpuls und einen Verschleiß am Innenpol und Magnetanker deutlich reduziert. Insbesondere ist beim erfindungsgemäßen Ventil keine teure Verschleißschutzschicht mehr notwendig, sondern die Stirnflächen des Innenpols und des Magnetankers können ohne zusätzliche Verschleißschutzschicht hergestellt werden. Hierdurch wird eine Herstellung des Ventils deutlich verbilligt. Weiter ist eine der Stirnflächen des Innenpols bzw. des Magnetankers ein Mehrfachkegel und die andere der Stirnflächen ist eine kugelförmige Fläche. Hierdurch können die beiden Kontaktlinien zwischen Innenpol und Magnetanker durch einen Kontakt der kugelförmigen Fläche an wenigstens zwei Kegelflächen des Mehrfachkegels erhalten werden. Besonders bevorzugt ist der Mehrfachkegel mit genau einer ersten und einer zweiten Kegelfläche vorgesehen und somit besonders einfach herstellbar. Die kugelförmige Fläche kontaktiert dabei jeweils eine der ersten und zweiten Kugelflächen.

Die Unteransprüche zeigen bevorzugte Weiterbildungen der Erfindung.

Vorzugsweise sind die beiden Kontaktlinien jeweils Kreislinien. Hierbei sind weiter bevorzugt die beiden Kontaktlinien vorzugsweise konzentrisch zu einer Mittelachse des Ventils angeordnet. Hierdurch wird eine symmetrische Ausgestaltung des Ventils sichergestellt.

Weiter bevorzugt ist die Stirnfläche des Innenpols als Mehrfachkegel mit wenigstens einem ersten und zweiten Kegelbereich ausgebildet und die Stirnfläche des Magnetankers ist als kugelförmige Fläche ausgebildet.

Alternativ ist die Stirnfläche des Innenkegels als kugelförmige Fläche ausgebildet und die Stirnfläche des Magnetankers ist als Mehrfachkegel mit wenigstens einem ersten und zweiten Kegelbereich ausgebildet.

Weiter bevorzugt weisen die Stirnflächen am Innenpol und am Magnetanker jeweils einen Planbereich auf, welcher senkrecht zu einer Längsachse des Ventils ist. Die Planbereiche an den Stirnflächen sind vorzugsweise radial außerhalb der beiden Kontaktlinien zwischen Innenpol und Magnetanker angeordnet. An den senkrecht zur Längsachse des Ventils vorgesehenen Planbereichen wird der magnetische Fluss parallel zur Bewegungsrichtung des Magnetankers und somit senkrecht zu den Planbereichen geleitet. Somit kann ein notwendiges magnetisches Kraftniveau erhalten werden, da insbesondere Feldlinien, welche über eine kugelförmige Fläche zwischen Innenpol und Magnetanker verlaufen, nur in geringem Maße zur Krafterzeugung beitragen, da die Feldlinien nicht zur Bewegungsrichtung des Magnetankers ausgerichtet sind, sondern senkrecht zur Kugeloberfläche in den Arbeitsluftspalt austreten.

Besonders bevorzugt sind die Stirnflächen von Innenpol und Magnetanker derart ausgebildet, dass sich der Innenpol und der Magnetanker ausschließlich an den beiden Kontaktlinien berühren.

Weiter bevorzugt ist die Stirnfläche des Magnetankers als kugelförmige Fläche ausgebildet und der Magnetanker weist ferner einen Führungsbereich auf, wobei der Führungsbereich in einer Ebene senkrecht zur Längsachse des Ventils angeordnet ist und ein Mittelpunkt der kugelförmigen Fläche der Stirnfläche des Magnetankers in der Ebene liegt. Bei dieser Ausgestaltung kann eine besonders verkippungsrobuste Anker-Innenpol-Anordnung sichergestellt werden.

Ein besonders kompakter Aufbau ergibt sich, wenn der Magnetanker mit einer Ventilnadel verbunden ist und die Ventilnadel im Innenpol geführt ist.

Vorzugsweise weist keine der Stirnflächen von Innenpol und Magnetanker eine Verschleißschutzschicht auf und ebenso weist keine der Stirnseiten von Innenpol und Magnetanker eine magnetische Trennschicht auf. Da im Kontaktfall zwischen Innenpol und Magnetanker lediglich zwei Kontaktlinien vorhanden sind, kann bei Vorhandensein einer kugelförmigen Stirnfläche eine Magnettrennschicht entfallen, da ein Beitrag der Feldlinien zur magnetischen Klebekraft im Bereich der kugelförmigen Stirnfläche gering ist, da die Feldlinien senkrecht zur Kugeloberfläche verlaufen und somit nur einen kleinen axialen Kraftanteil aufweisen.

Weiter bevorzugt sind die Planbereiche an den Stirnflächen von Innenpol und Magnetanker derart ausgebildet, dass auch bei einer maximalen Verkippung des Magnetankers kein Kontakt zwischen Innenpol und Magnetanker im Bereich der Planbereiche vorhanden ist.

Das erfindungsgemäße Ventil ist besonders bevorzugt ein Kraftstoffeinspritzventil.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Schnittansicht eines elektromagnetisch betätigbaren Ventils gemäß einem ersten Ausführungsbeispiel der Erfindung,
- Figur 2: eine vergrößerte, schematische Darstellung eines Anschlagbereichs zwischen einem Innenpol und einem Magnetanker des Ventils von Figur 1,
- Figur 3: eine vergrößerte, schematische Darstellung eines Anschlagens des Magnetankers am Innenpol, und
- Figur 4: eine schematische Schnittansicht eines Innenpols und eines Magnetankers gemäß einem zweiten Ausführungsbeispiel der Erfindung.

### Bevorzugte Ausführungsformen der Erfindung

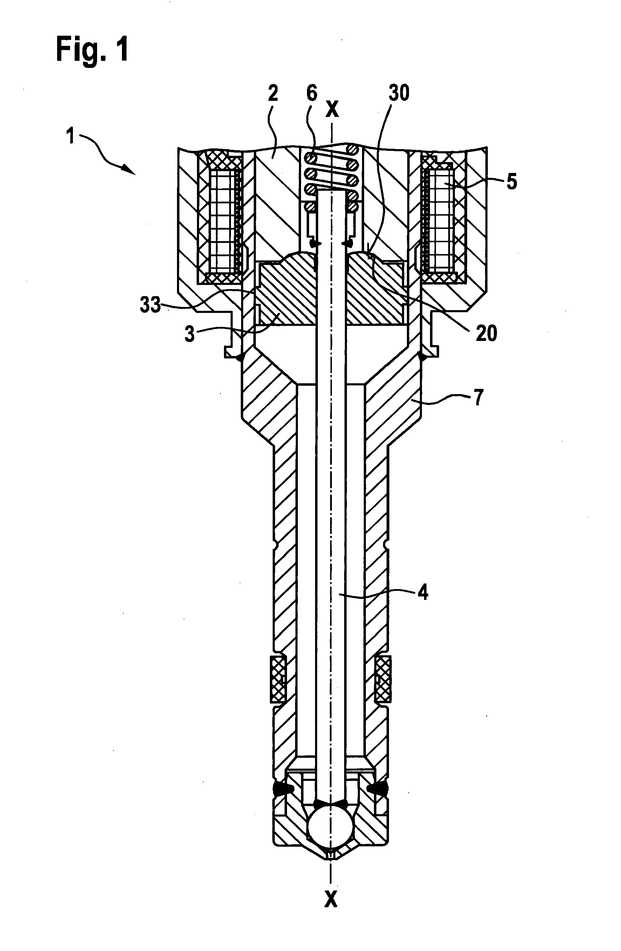

Nachfolgend wird unter Bezugnahme auf die Figuren 1 bis 3 ein Kraftstoffeinspritzventil 1 gemäß einem ersten Ausführungsbeispiel der Erfindung im Detail beschrieben.

Wie aus Figur 1 ersichtlich ist, umfasst das Kraftstoffeinspritzventil 1 einen Innenpol 2, einen Magnetanker 3 und eine Spule 5. Ferner ist eine Ventilnadel 4 vorgesehen, welche mit dem Magnetanker 3 verbunden ist. Eine Rückstellfeder 6 stellt die Ventilnadel 4 wieder in die in Figur 1 gezeigte Ausgangsstellung zurück, in welcher das Kraftstoffeinspritzventil 1 geschlossen ist. Das Bezugszeichen 7 bezeichnet ein Gehäuse des Kraftstoffeinspritzventils.

Zur Betätigung des Kraftstoffeinspritzventils wird in bekannter Weise die Spule 5 bestromt, wodurch der Magnetanker 3 gegen den Innenpol 2 angezogen wird und hierbei bei einem maximalen Öffnungswunsch des Einspritzventils gegen den Innenpol 2 anschlägt. Figur 1 zeigt den geschlossenen Zustand des Ventils.

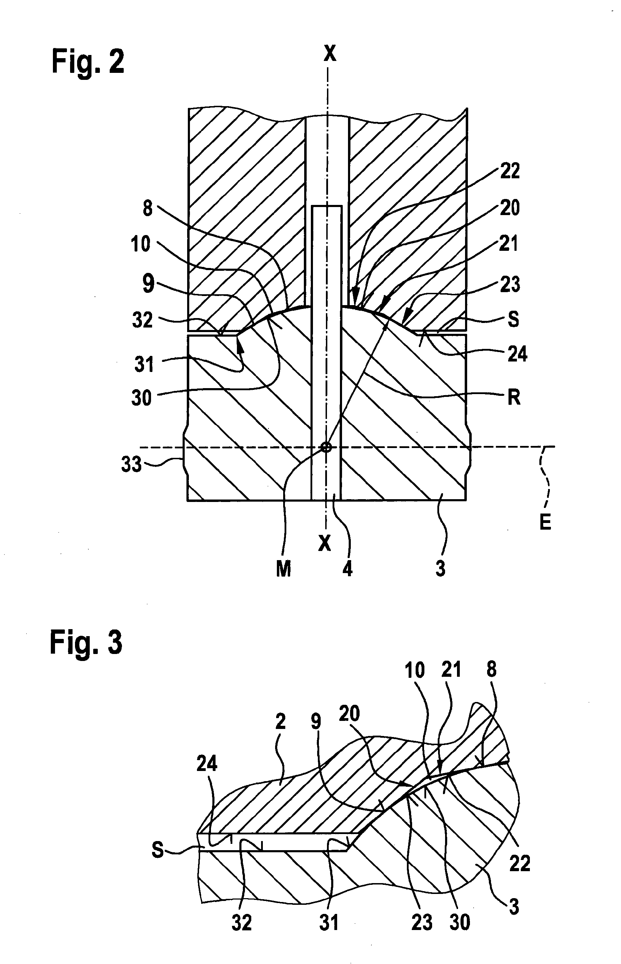

Die Ausgestaltung des Innenpols 2 und des Magnetankers 3 ist im Detail in Figur 2 und 3 gezeigt. Wie aus Figur 2 ersichtlich ist, weist eine erste Stirnseite 20 einen Mehrfachkegel 21 und einen Planbereich 24 auf. Der Mehrfachkegel 21 umfasst einen ersten Kegelbereich 22 und einen zweiten Kegelbereich 23. Der Planbereich 24 an der Stirnseite des Innenpols 2 ist dabei radial, ausgehend von einer Mittelachse X-X des Ventils, weiter außen als der Mehrfachkegel 21 angeordnet.

Eine zweite Stirnseite 30 des Magnetankers 3 weist einen kugelförmigen Bereich 31 und einen Planbereich 32 auf. Der Planbereich 32 ist ebenfalls von der Mittelachse X-X radial weiter außen als der kugelförmige Bereich 31 vorgesehen.

In dem in Figur 2 gezeigten geöffneten Zustand des Ventils, in welchem der Magnetanker 3 an den Innenpol 2 anschlägt, ergeben sich durch die geometrische Ausgestaltung der Stirnseiten 20, 30 von Innenpol 2 und Magnetanker 3 eine erste kreisförmige Kontaktlinie 8 und eine zweite kreisförmige Kontaktlinie 9. An der ersten Kontaktlinie 8 kommt der erste Kegelbereich 22 mit dem kugelförmigen Bereich 31 in Berührung und an der zweiten Kontaktlinie 9 kommt der zweite Kegelbereich 23 mit dem kugelförmigen Bereich 31 in Berührung. Hierbei ist im Kontaktzustand zwischen den beiden Planbereichen 24, 32 immer noch ein Spalt S vorhanden.

Somit wird ein Kontakt zwischen dem Innenpol 2 und dem Magnetanker 3 auf die beiden Kontaktlinien 8, 9 begrenzt. Wie weiter aus Figur 2 und 3 ersichtlich ist, ergibt sich hierdurch zwischen den beiden Kontaktlinie 8, 9 ein Dämpfungsvolumen 10. Das Dämpfungsvolumen 10 schließt im Kontaktfall Kraftstoff ein und kann dadurch eine robuste Dämpfung auf einem hohen Niveau bereitstellen, wodurch ein Anschlagimpuls reduziert wird. Wie aus Figur 3 deutlich wird, muss dabei das Dämpfungsvolumen 10 kein großes Volumen aufweisen, so dass durch die erfindungsgemäße Ausgestaltung der Stirnseiten 20, 30 des Innenpols 2 und des Magnetankers 3 kein zusätzlicher Platzbedarf resultiert.

Wie weiter aus den Figuren 2 und 3 ersichtlich ist, sind die beiden Planbereiche 24, 32 des Innenpols 2 und des Magnetankers 3 parallel zueinander ausgerichtet und dabei senkrecht zur Mittelachse X-X. Im Anschlagfall (Figuren 2 und 3) ist dabei der Spalt S derart vorgesehen, dass auch im Fall eines leichten Verkippens des Magnetankers 2 aus der Mittelachse X-X heraus kein Kontakt im Bereich der Planbereiche 24, 32 auftritt. Selbst bei einem leichten Verkippen des Magnetankers 2 treten aufgrund der erfindungsgemäßen Ausgestaltung der Stirnseiten 20, 30 lediglich zwei Kontaktlinien auf. Diese Kontaktlinien im verkippten Fall des Magnetankers 3 sind dann zwar nicht mehr konzentrisch zur Mittelachse X-X, es werden trotzdem jedoch die gleichen Vorteile wie bei der ausgelegten konzentrischen Anordnung der Kontaktlinien 8, 9 erhalten.

Um eine Verkippung möglichst zu vermeiden, weist der Magnetanker 3 ferner einen Führungsbereich 33 an seiner radialen Außenseite auf. Der Führungsbereich 33 liegt dabei in einer Ebene E, welche senkrecht zur Mittelachse X-X ist. In dieser Ebene E liegt ebenfalls ein Mittelpunkt M des kugelförmigen Bereichs 31 des Magnetankers 3. Der Radius R ist in Figur 2 eingezeichnet.

Somit wird durch die erfindungsgemäße Idee der Ausbildung der beiden anschlagseitigen Stirnseiten 20, 30 des Innenpols 2 und des Magnetankers 3 in Form einer Teilkugel einerseits und in Form eines Mehrfachkegels andererseits ein Anschlag an zwei Kontaktlinien 8, 9 bereitgestellt. Dabei wird ein Dämpfungsvolumen 10 zwischen den beiden Kontaktlinien 8, 9 im Anschlagsfall definiert. Somit kann im Anschlagsfall eine hervorragende Dämpfung und damit ein reduzierter Verschleiß zwischen Innenpol 2 und Magnetanker 3 erhalten werden. Hierdurch kann eine Lebensdauer des Ventils deutlich verlängert werden, ohne dass dabei eine Verschleißschutzbeschichtung am Innenpol oder am Magnetanker notwendig wäre.

Ferner kann zusätzlich noch ein magnetisches Kleben zwischen Magnetanker 3 und Innenpol 2 reduziert werden, da nur ein minimaler, zweifach linienförmiger Kontakt zwischen den beiden Bauteilen im Anschlagsfall vorhanden ist.

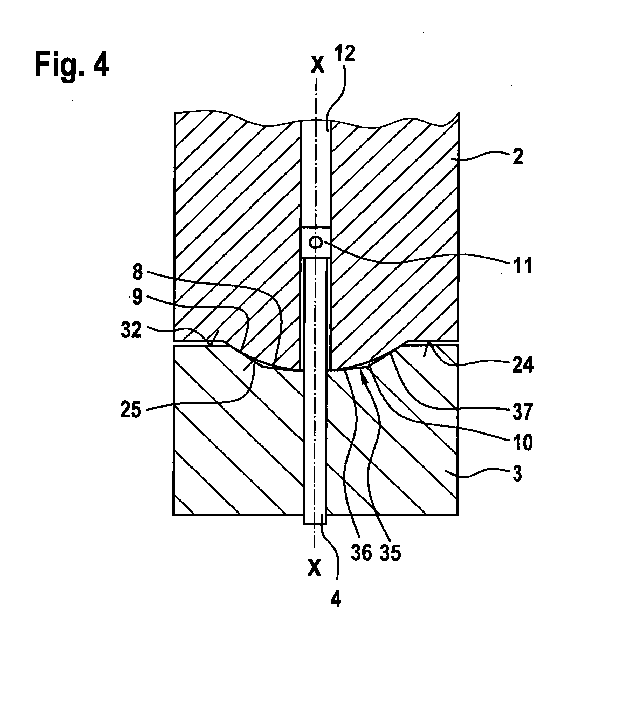

Figur 4 zeigt ein zweites Ausführungsbeispiel der Erfindung, wobei gleiche bzw. funktional gleiche Teile mit den gleichen Bezugszeichen wie im ersten Ausführungsbeispiel bezeichnet sind. Beim zweiten Ausführungsbeispiel weist der Innenpol 2 einen kugelförmigen Bereich 25 auf und der Magnetanker 3 einen Mehrfachkegel 35 mit einem ersten Kegelbereich 36 und einem zweiten Kegelbereich 37. Hierdurch wird wiederum ein Dämpfungsvolumen 10 zwischen den beiden Stirnseiten des Innenpols 2 und des Magnetankers 3 erhalten. Ebenso werden zwei kreisförmige Kontaktlinien 8, 9 im Anschlagsfall, welcher in Figur 4 dargestellt ist, erhalten. Weiterhin weist das Ventil des zweiten Ausführungsbeispiels ferner noch ein Führungselement 11 auf, welches am Ende der Ventilnadel 4 angeordnet ist. Im Innenpol 2 ist hierzu eine Führungsöffnung 12 vorgesehen, in welcher das Führungselement 11 geführt ist. Somit wird die Ventilnadel 4, welche fest mit dem Führungselement 11 und dem Magnetanker 3 verbunden ist, im Inneren des Innenpols 2 geführt. Dadurch kann ein besonders kompakter Aufbau erhalten werden. Ansonsten entspricht dieses Ausführungsbeispiel dem ersten Ausführungsbeispiel, so dass auf die dort gegebene Beschreibung verwiesen werden kann.

## Patentansprüche

1. Elektromagnetisch betätigbares Ventil zum Steuern von Fluiden, umfassend
- einen Innenpol (2) und
- einen Magnetanker (3),
- wobei der Innenpol (2) eine zum Magnetanker (3) gerichtete erste Stirnseite (20) aufweist und der Magnetanker (3) eine zum Innenpol (2) gerichtete zweite Stirnseite (30) aufweist,
- wobei zwischen der ersten und zweiten Stirnseite (20, 30) eine erste Kontaktlinie (8) und eine zweite Kontaktlinie (9) vorhanden ist, wenn sich der Innenpol (2) und der Magnetanker (3) berühren, und
- wobei ein Dämpfungsvolumen (10) zwischen der ersten und zweiten Kontaktlinie (8, 9) vorhanden ist, wenn sich der Innenpol und der Magnetanker berühren,
**dadurch gekennzeichnet,**
**dass** eine der Stirnseiten (20, 30) einen Mehrfachkegel umfasst und die andere der Stirnseiten (20, 30) eine kugelförmige Fläche umfasst.

2. Ventil nach Anspruch 1, **dadurch gekennzeichnet, dass** die erste und zweite Kontaktlinie (8, 9) jeweils eine Kreislinie ist, insbesondere konzentrisch zu einer Mittelachse (X-X) des Ventils.

3. Ventil nach Anspruch 1, **dadurch gekennzeichnet, dass** die erste Stirnseite (20) des Innenpols (2) einen Mehrfachkegel (21) mit wenigstens einem ersten Kegelbereich (22) und einem zweiten Kegelbereich (23) umfasst und die zweite Stirnseite (30) des Magnetankers (3) einen kugelförmigen Bereich (31) umfasst.

4. Ventil nach Anspruch 1, **dadurch gekennzeichnet, dass** die erste Stirnseite (20) des Innenpols einen kugelförmigen Bereich (25) umfasst und die zweite Stirnseite (30) des Magnetankers (3) wenigstens einen Mehrfachkegel (35) mit einem ersten Kegelbereich (36) und einem zweiten Kegelbereich (37) umfasst.

5. Ventil nach einem der vorhergehenden Ansprüche, **dadurch gekennzeichnet, dass** die erste und zweite Stirnseite (20, 30) jeweils einen Planbereich (24, 32) umfassen, wobei jeder Planbereich senkrecht zu einer Längsachse (X-X) des Ventils ist.

6. Ventil nach einem der vorhergehenden Ansprüche, **dadurch gekennzeichnet, dass** sich der Innenpol (2) und der Magnetanker (3) ausschließlich an der ersten und zweiten Kontaktlinie (8, 9) berühren.

7. Ventil nach einem der vorhergehenden Ansprüche, **dadurch gekennzeichnet, dass** die zweite Stirnfläche (30) des Magnetankers (3) einen kugelförmigen Bereich (31) umfasst und der Magnetanker (3) einen Führungsbereich (33) aufweist, wobei der Führungsbereich (33) in einer Ebene (E) angeordnet ist, die senkrecht zur Längsachse (X-X) des Ventils liegt und ein Mittelpunkt (M) des kugelförmigen Bereichs in der Ebene (E) liegt.

8. Ventil nach einem der vorhergehenden Ansprüche, **dadurch gekennzeichnet, dass** der Magnetanker (3) mit einer Ventilnadel (4) verbunden ist und die Ventilnadel (4) im Innenpol (2) geführt ist.

9. Ventil nach einem der vorhergehenden Ansprüche, **dadurch gekennzeichnet, dass** die erste und zweite Stirnseite (20, 30) des Innenpols (2) und des Magnetankers (3) keine Verschleißschutzschicht aufweist.

## Claims

1. Electromagnetically operated valve for controlling fluids, comprising
- an internal pole (2), and
- a magnet armature (3),
- wherein the internal pole (2) has a first end face (20) which is directed towards the magnet armature (3), and the magnet armature (3) has a second end face (30) which is directed towards the internal pole (2),
- wherein a first contact line (8) and a second contact line (9) are present between the first and second end face (20, 30) when the internal pole (2) and the magnet armature (3) make contact, and
- wherein a damping volume (10) is present between the first and the second contact line (8, 9) when the internal pole and the magnet armature make contact,
**characterized**
**in that** one of the end faces (20, 30) comprises a multiple cone, and the other of the end faces (20, 30) comprises a spherical surface.

2. Valve according to Claim 1, **characterized in that** the first and the second contact line (8, 9) are each a circle line, in particular concentric in relation to a centre axis (X-X) of the valve.

3. Valve according to Claim 1, **characterized in that** the first end face (20) of the internal pole (2) comprises a multiple cone (21) with at least one first cone region (22) and one second cone region (23), and the second end face (30) of the magnet armature (3) comprises a spherical region (31).

4. Valve according to Claim 1, **characterized in that** the first end face (20) of the internal pole comprises a spherical region (25), and the second end face (30) of the magnet armature (3) comprises at least one multiple cone (35) with a first cone region (36) and a second cone region (37).

5. Valve according to one of the preceding claims, **characterized in that** the first and the second end face (20, 30) each comprise a flat region (24, 32), wherein each flat region is perpendicular to a longitudinal axis (X-X) of the valve.

6. Valve according to one of the preceding claims, **characterized in that** the internal pole (2) and the magnet armature (3) make contact exclusively at the first and the second contact line (8, 9).

7. Valve according to one of the preceding claims, **characterized in that** the second end face (30) of the magnet armature (3) comprises a spherical region (31), and the magnet armature (3) has a guide region (33), wherein the guide region (33) is arranged in a plane (E) which lies perpendicular to the longitudinal axis (X-X) of the valve, and a centre point (M) of the spherical region lies in the plane (E).

8. Valve according to one of the preceding claims, **characterized in that** the magnet armature (3) is connected to a valve needle (4), and the valve needle (4) is guided in the internal pole (2).

9. Valve according to one of the preceding claims, **characterized in that** the first and the second end face (20, 30) of the internal pole (2) and of the magnet armature (3) do not have a wear protection layer.

## Revendications

1. Soupape actionnée de manière électromagnétique pour la commande de fluides, comprenant:
- un pôle intérieur (2) et
- une armature d'aimant (3),
- dans laquelle le pôle intérieur (2) présente un premier côté frontal (20) orienté vers l'armature d'aimant (3) et l'armature d'aimant (3) présente un deuxième côté frontal (30) orienté vers le pôle intérieur (2),
- dans laquelle il se trouve entre le premier et le deuxième côtés frontaux (20, 30) une première ligne de contact (8) et une deuxième ligne de contact (9), lorsque le pôle intérieur (2) et l'armature d'aimant (3) se touchent, et
- dans laquelle il se trouve un volume d'amortissement (10) entre la première et la deuxième lignes de contact (8, 9), lorsque le pôle intérieur et l'armature d'aimant se touchent,
**caractérisée en ce qu'**un des côtés frontaux (20, 30) comprend un cône multiple et l'autre des côtés frontaux (20, 30) comprend une surface sphérique.

2. Soupape selon la revendication 1, **caractérisée en ce que** la première et la deuxième lignes de contact (8, 9) est chaque fois une ligne circulaire, en particulier concentrique à un axe central (X-X) de la soupape.

3. Soupape selon la revendication 1, **caractérisée en ce que** le premier côté frontal (20) du pôle intérieur (2) comprend un cône multiple (21) avec au moins une première région conique (22) et une deuxième région conique (23) et le deuxième côté frontal (30) de l'armature d'aimant (3) comprend une région sphérique (31).

4. Soupape selon la revendication 1, **caractérisée en ce que** le premier côté frontal (20) du pôle intérieur comprend une région sphérique (25) et le deuxième côté frontal (30) de l'armature d'aimant (3) comprend au moins un cône multiple (35) avec une première région conique (36) et une deuxième région conique (37).

5. Soupape selon l'une quelconque des revxendications précédentes, **caractérisée en ce que** le premier et le deuxième côtés frontaux (20, 30) comprennent chacun une région plane (24, 32), dans laquelle chaque région plane est perpendiculaire à un axe longitudinal (X-X) de la soupape.

6. Soupape selon l'une quelconque des revendications précédentes, **caractérisée en ce que** le pôle intérieur (2) et l'armature d'aimant (3) se touchent exclusivement sur la première et la deuxième lignes de contact (8, 9).

7. Soupape selon l'une quelconque des revendications précédentes, **caractérisée en ce que** la deuxième face frontale (30) de l'armature d'aimant (3) comprend une région sphérique (31) et l'armature d'aimant (3) présente une région de guidage (33), dans laquelle la région de guidage (33) est agencée dans un plan (E), qui est perpendiculaire à l'axe longitudinal (X-X) de la soupape et un point central (M) de la région sphérique est située dans le plan (E).

8. Soupape selon l'une quelconque des revendications précédentes, **caractérisée en ce que** l'armature d'aimant (3) est reliée au pointeau (4) et le pointeau (4) est guidé dans le pôle intérieur (2).

9. Soupape selon l'une quelconque des revendications précédentes, **caractérisée en ce que** le premier et le deuxième côtés frontaux (20, 30) du pôle intérieur (2) et de l'armature d'aimant (3) ne présentent pas de couche de protection contre l'usure.
